# EUROPÄISCHE PATENTANMELDUNG

(11) **EP 0 893 232 A1**
(43) Veröffentlichungstag der Anmeldung: **27.01.1999**
(21) Anmeldenummer: 98113883.7
(22) Anmeldetag: 24.07.1998
(51) Int. Cl.: B29C 59/04, A63B 51/02, D02J 3/10

(54) **Verfahren und Vorrichtung zur Herstellung von Saiten für die Bespannung von Ballspielschlägern**

(30) Priorität: 25.07.1997 DE 19732377
(71) Anmelder: Kirschbaum Sportartikel GmbH, 58456 Witten (DE)
(72) Erfinder: Kirschbaum, Horst, 58456 Witten (DE)
(74) Vertreter: Patentanwälte Wenzel & Kalkoff

(57) **Zusammenfassung**

Es wird ein Verfahren und eine Vorrichtung zum Herstellen einer Saite für einen Ballspielschläger beschrieben. Die Oberfläche einer Saite aus Kunststoff wird so bearbeitet, daß ein Oberflächenprofil gebildet wird. Das Verfahren und die verwendete Vorrichtung ist dadurch besonders einfach, daß die Saite bei Normaltemperatur unter Druck bleibend verformt wird, wobei das Oberflächenprofil durch Einprägen von Vertiefungen in die Oberfläche der Saite gebildet wird.

## Beschreibung

Die Erfindung betrifft ein Verfahren zur Herstellung von Saiten für die Bespannung von Ballspielschlägern, bei dem die Oberfläche einer Saite aus Kunststoff so bearbeitet wird, daß ein Oberflächenprofil gebildet wird sowie eine hierfür verwendete Vorrichtung.

Entsprechende Saiten werden zur Bespannung von Tennisschlägern, aber auch von Badminton- oder Squashschlägern verwendet. Die Saiten müssen zahlreichen Kriterien genügen, sie müssen beispielsweise ausreichend elastisch sein, weiter sind eine hohe Ballbeschleunigung, Spielkomfort, Witterungsunabhängigkeit und Lebensdauer von Bedeutung. Für die Spielqualität ist darüber hinaus die Fähigkeit der Saite von Bedeutung, dem Ball beim Schlag eine Eigendrehung (Top-Spin oder Slice) zu verleihen, durch die die Flugeigenschaften des Balls wesentlich beeinflußt werden können.

Neben Saiten aus Naturdarm finden häufig Saiten aus Kunststoff, insbesondere aus Polyamid bzw. Polyethylenterephtalat Verwendung. Die Kunststoff-Saiten werden entweder als Monofilament-Saiten oder als gedrillte Saiten angeboten. Saiten aus Kunststoff-Monofilamenten sind preiswert, sie sind wenig temperatur- und feuchtigkeitsempfindlich, doch vermögen sie dem Ball nur wenig Eigendrehung zu vermitteln.

Gedrillte Saiten weisen entweder eine Anzahl von Monofilamenten auf oder bestehen wie z.B im DE-GM 1831 958 beschrieben aus einem Monofilament mit nichtrundem Querschnitt, das durch Verwendung einer entsprechend profilierten Düse erzielt wird. Die Saiten werden zur Verarbeitung verdrillt und umwickelt, so daß sich eine schraubenförmige Oberflächenstrukur ergibt. Hier ist sowohl Herstellung als auch Verarbeitung aufwendig.

Saiten nach der US 4,805,393 weisen ebenfalls eine Schraubenstruktur auf. Nach dem bekannten Stand der Technik werden solche Strukturen beim Extrudieren geformt. Dieses Verfahren ist äußerst aufwendig. Der Vorzug von Saiten mit einem entsprechenden Oberflächenprofil liegt jedoch unter anderem darin, daß sie dem Ball eine hohe Eigendrehung verleihen.

In der US-A-555,524 wird ein Verfahren zum Herstellen einer profilierten Saite zum Bespannen von Ballspielschlägern beschrieben, bei der die Seele der Saite durch ein Kunstharz-Bad gezogen wird und bei dem anschließend die mit Kunstharz beschichtete Saite durch eine Form gezogen wird, die der Kunstharz-Schicht ein Profil verleiht. Die profilierte Außenschicht aus Kunstharz soll dem Ball eine erhöhte Eigendrehung verleihen. Dieses Verfahren ist, ebenso wie andere bekannte Verfahren (z.B. das Umwinden einer Seele mit Fäden) technisch sehr aufwendig und damit teuer.

In den US-Patenten US 4,349,198 und US 4,363,613 wird ein Verfahren zum Aufbringen eines Oberflächenprofils aus punktförmigen Erhebungen auf eine Saite beschrieben. Diese Oberflächenstruktur wird erzeugt, indem die Saite erwärmt und in einer Rille zwischen zwei Walzen geführt wird, die entsprechende punktförmige Vertiefungen aufweist. Synchron mit dem Weitertransport der Saite drehen sich die Walzen und bearbeiten damit den jeweils in den Rillen verlaufenden Abschnitt der Saite. Das erwärmte Kunststoffmaterial der Saite fließt hierbei in die Vertiefungen und bildet so ein Oberflächenprofil aus den Vertiefungen entsprechenden Erhebungen, die nach dem Abkühlen starr werden. Das Verfahren erfordert eine komplexe Apparatur, die das Erwärmen und Abkühlen sowie die Führung und den Transport der Saite durch die Apparatur gewährleistet.

Besonders das Erwärmen handelsüblicher gereckter KunststoffSaiten ist mit Problemen verbunden. Denn durch die Erwärmung verliert die Saite ihre Dehnungs- und Festigkeitseigenschaften weitgehend. Die Verarbeitung der Saite muß daher zur Vermeidung von Schrumpfungen und Stauchungen unter konstanter Spannung erfolgen. Entsprechend aufwendig ist die notwendige Apparatur.

Die erzielte Oberflächenstruktur aus punktförmigen Erhebungen ist zudem unvorteilhaft bei der Verarbeitung (Bespannung eines Schlägers), da beim Fädeln der Saite durch die Bohrungen am Rahmen und beim Gleiten über Kanten und Quersaiten des zu bespannenden Schlägers die Erhebungen blockieren. Wird eine solche Saite über eine Kante gezogen, kommt es zu einer Art Sägeeffekt, der Beschädigungen und Verschleiß am Schläger und an den Quersaiten hervorrufen kann.

Es ist daher Aufgabe der Erfindung, ein Verfahren und eine Vorrichtung zur Herstellung einer Saite zu schaffen, mit denen die preiswerte Herstellung einer Saite ermöglicht wird, die dem zu spielenden Ball eine hohe Eigendrehung verleiht.

Diese Aufgabe wird erfindungsgemäß durch ein Verfahren gelöst, bei dem die Saite bei Normaltemperatur unter Druck bleibend verformt wird, wobei das Oberflächenprofil durch Einprägen von Vertiefungen in die Oberfläche der Saite gebildet wird.

Mit diesem Verfahren wird eine Saite hergestellt, die eine profilierte Oberfläche aufweist. Das Profil der Oberfläche besteht aus den eingeprägten Vertiefungen und den zwischen diesen Vertiefungen stehengebliebenen Bereichen. Unter Profil wird hier verstanden, daß die Oberfläche nicht glatt ist, sondern erhöhte Bereiche und Vertiefungen aufweist.

Das Einprägen von Vertiefungen unter Druck unterscheidet sich vom Formen der Oberfläche nach der US 4,363,613 dadurch, daß kein Ausformen eines fließenden Materials erfolgt. Das Material wird vielmehr an den Stellen, an denen Vertiefungen eingeprägt werden, zusammengedrückt, so daß sich eine plastische Verformung ergibt. Zusätzlich kann es hierbei je nach Festigkeit des Materials auch zu einer leichten Anhebung der nicht zusammengedrückten Bereiche kommen.

Eine solchermaßen bearbeitete Saite verleiht aufgrund der profilierten Oberfläche dem Ball eine hohe Eigendrehung. Aufgrund der Verwendung von sehr kostengünstig erhältlichen Monofilament-Saiten kann sie zu geringen Kosten hergestellt werden. Trotzdem weist sie äußerst günstige Spieleigenschaften auf, so daß dem Ball eine Eigendrehung verliehen werden kann, die ebensogut oder sogar besser als die mit einer gezwirnten oder durch Beschichten mit einem Profil versehenen Saite Erzielte ist. Es hat sich herausgestellt, daß der innere Aufbau der Saite aus Seele und Umhüllung für das Erzeugen einer hohen Eigendrehung keine ausschlaggebende Bedeutung hat. Vermutlich genügt es, daß der Ball nicht auf eine runde, glatte Oberfläche trifft, sondern daß die Oberfläche der Saite ein Profil, also Erhöhungen, nachfolgend als Stege bzw. Erhebungen bezeichnet, und Vertiefungen aufweist.

Durch das Einprägen von Vertiefungen ergibt sich aber noch ein weiterer überraschender Vorteil:

Bei der Auswahl von Saiten sind bisher grundsätzlich zwei gegensätzliche Anforderungen zu beachten: Die Verwendung möglichst dünner Saiten führt zu einer erhöhten Elastizität der Bespannung, die einen größeren Spielkomfort ermöglicht. Sehr dünne Saiten haben allerdings den Nachteil einer geringen Haltbarkeit, insbesondere wegen des Abriebs. Die Verwendung dickerer Saiten hingegen, die gegen Abrieb widerstandsfähiger sind und so eine längere Lebensdauer haben, ist jedoch für den Spielkomfort nachteilig, weil diese nur eine geringe Elastizität aufweisen.

Saiten, die nach dem erfindungsgemäßen Verfahren hergestellt sind weisen nun - besonders ausgeprägt bei tief eingeprägten Vertiefungen einer Profiltiefe von 10% oder mehr des Außendurchmessers - den Spielkomfort einer dünnen Saite auf, während sie die Haltbarkeit einer dicken Saite haben. Dies kann zu einem Teil vermutlich durch einen Verhärtungseffekt erklärt werden, der sich beim Zusammenpressen des Kunststoffmaterials unter Druck ergibt. Ein weiterer Grund erklärt sich folgendermaßen:

Saiten, die nach dem erfindungsgemäßen Verfahren hergestellt sind, weisen Vertiefungen auf, die an den Stellen, an denen sie angeordnet sind, den effektiven Durchmesser der Saite schwächen. Diese Stellen wirken also als über die Länge der Saite verteilte Schwächungen der Saite, die deren Elastizität bei Zugbelastungen deutlich erhöhen.

Die Vertiefungen liegen jeweils zwischen erhöhten Bereichen. Insbesondere wenn die Vertiefungen schmal gegenüber den erhöhten Bereichen sind, wird die äußere Oberfläche, an der mit Abriebbeanspruchungen auf die Saite zu rechnen ist, im wesentlichen durch die erhöhten Bereiche bestimmt. Der gegenüber mechanischem Abrieb effektive Durchmesser der Saite wird also durch die erhöhten Bereiche gebildet.

So stellt die mit dem erfindungsgemäßen Verfahren hergestellte Saite eine Optimierung in beide Richtungen dar: Die Saite bietet die Elastiziät und damit den Spielkomfort einer dünnen Saite und besitzt gleichzeitig die Abriebfestigkeit und damit hohe Lebendauer einer dicken Saite.

Die Herstellung eines Oberflächenprofils durch Einprägen hat gegenüber der Herstellung eines Profils beim Extrudieren den Vorteil, daß handelsüblich erhältliche Monofilament-Saiten verwendet werden können, die in großen Stückzahlen hergestellt werden und entsprechend günstig sind.

Einen wesentlichen Aspekt der Erfindung stellt die Tatsache dar, daß das Einprägen der Vertiefungen bei Normaltemperatur stattfindet. Hierdurch wird das Verfahren erheblich vereinfacht, da die Handhabung der Saite bei Normaltemperatur deutlich einfacher ist, als wenn die Saite zur Bearbeitung erwärmt wird wie in der US 4,363,613. Die Saite weist bei Normaltemperatur eine hohe Stabilität auf und kann nur unter erheblichem Druck verformt werden. Deshalb ist es nicht nötig, besondere Vorkehrungen für die Führung der Saite unter konstanter Zugspannung zu treffen, wie im Fall der heiß bearbeiteten Saite. Es kann eine einfache Apparatur verwendet werden, da Vorrichtungen zur Heizung und Abkühlung entfallen. Auch nachteilige Materialeffekte wie Schrumpfen bzw. Verlust von Elastizität werden vermieden.

Durch die Verarbeitung bei Normaltemperatur kommt es vermutlich auch zu den zusätzlichen Verhärtungseffekten, die durch das Zusammenpressen des Materials im kalten Zustand entstehen und die Haltbarkeit der Saite positiv beeinflussen.

Gemäß einer Weiterbildung der Erfindung werden die Vertiefungen durch Paare von formgebenden Walzen eingeprägt. Diese Walzen rotieren um im Abstand voneinander angeordnete Achsen, wobei ihre Umfangsflächen an die zu bearbeitende Saite gepreßt werden und auf deren Oberfläche abrollen. Auf der Umfangsfläche ist die Negativ-Form eines Profils eingeprägt, das sich durch das Anpressen dieser Umfangsfläche an die Saite in deren Oberfläche einprägt. Der Andruck der Walzen an die Saite wird dadurch hergestellt, daß die Saite in den Zwischenraum zwischen den Umfangsflächen verschiedener Walzen transportiert wird, wobei der Abstand zwischen diesen Umfangsflächen kleiner ist als der Außendurchmesser der Saite.

Eine solche Vorrichtung ist besonders gut zur Durchführung des erfindungsgemäßen Verfahrens geeignet. Paare von Walzen können hierbei von gegenüberliegenden Seiten gegen die Saite drücken. Besonders einfach ist diese Vorrichtung zu gestalten, wenn die Saite durch ein Vorschubmittel weitertransportiert wird. Denn dann muß kein Antrieb für die Walzen vorgesehen sein, weil die Umfangsflächen auf der Oberfläche der weitertransportierten Saite rollen und die Walzen so angetrieben werden.

Nach einer Weiterbildung der Erfindung wird eine Saite verwendet, die vor der Bearbeitung einen im wesentlichen runden Querschnitt aufweist. Solche Saiten werden in hohen Stückzahlen hergestellt und sind entprechend kostengünstig zuzukaufen.

Die Form des Profils auf der Oberfläche der Saite kann stark variieren. Besonders bevorzugt ist ein Profil, das im wesentlichen die Form mindestens einer umlaufenden Rille aufweist, die schraubenförmig um die Saite herum verläuft. Mit "im wesentlichen" ist hier gemeint, daß die Rille bzw. Rillen unterbrochen sein können, bzw. daß sie nur abschnittsweise verlaufen. Ein solches Muster wird z.B. durch die erfindungsgemäße Vorrichtung verursacht, bei der gewisse Bereiche der Oberfläche der Saite nicht von den Umfangsflächen der Prägewalzen berührt werden. Außerdem können durch Walzen, deren Umfangsprofile gegeneinander versetzt sind, schräge Rillen eingeprägt werden, die nicht exakt die Fortsetzung der von anderen Walzen eingeprägten Rillen darstellen. Solche Profile sollen hier der einfacheren Darstellung halber ebenfalls als "im wesentlichen schraubenförmig" verstanden werden.

Eine Saite mit einer solchen Oberfläche gleicht einer verdrillten Saite, ohne daß allerdings die Saite tatsächlich verdrillt werden muß. Sie hat die positiven Spieleigenschaften einer solchen deutlich teureren Saite. Zusätzlich leidet sie nicht unter dem Problem tatsächlich verdrillter Saiten, bei denen die Elastizität über die Lebensdauer stark nachläßt. Denn bei solchen Saiten ist ein Teil der Elastizität durch die gewickelte (lockere) Struktur bedingt, die sich bei Beanspruchung jedoch verdichtet und so Elastizität verliert.

Die Oberflächenstruktur mit schraubenförmigen Rillen ist auch besonders vorteilhaft bei der Verarbeitung der Saite. Beim Fädeln der Saite durch schmale Bohrungen bzw. wenn die Saite über eine Kante gezogen wird ist es nämlich wichtig, daß die Saite nicht an einer Kante bzw. an Kreuzungspunkten mit Quersaiten blockiert, sondern leicht über diese gleitet. Während eine Saite mit z.B. punktförmigen Erhebungen gleichsam wie eine Säge wirken würde, wenn sie über eine Kante gezogen wird, gleitet eine Saite mit Rillen in einer ein- oder mehrgängigen Schraubenform leicht über die Kante. Wenn sich eine Kante in einer der Vertiefungen verfängt, gleitet sie in dieser Vertiefung entlang, ohne dem Nachführen der Saite einen starken Widerstand entgegenzusetzen.

Die Tiefe des Profils, das heißt der Abstand zwischen der Oberfläche der Saite und der stärksten Vertiefung oder Einschnürung zwischen zwei Stegen bzw. Erhebungen, beträgt vorzugsweise 2 - 20 % des Außendurchmessers der Saite. Bereits eine geringe Profiltiefe genügt, um die Eigendrehung des Balles beim Abspielen zu erhöhen. Die Profiltiefe kann nach einer Weiterbildung der Erfindung durch Veränderung des Abstandes der Walzen zueinander eingestellt werden.

Die erfindungsgemäße Vorrichtung umfaßt formgebende Walzen, die um im Abstand voneinander angeordnete Achsen rotieren und die eine Umfangskante bzw. -fläche aufweisen, die die Negativ-Form des in die Oberfläche der Saite einzuprägenden Profils aufweist, wobei der Abstand zwischen den Umfangsflächen bzw. - kanten der formgebenden Walzen geringfügig kleiner ist als der Außendurchmesser der zu bearbeitenden Saite.

Es ist keine Einrichtung zum Heizen der Saiten oder der Walzen vorgesehen. Hierdurch ist die Vorrichtung sehr einfach zu gestalten, d.h. es muß z.B. kein geschlossenes Gehäuse vorgesehen sein, es sind keine Anschlüsse an Versorgungsleitungen notwendig usw. Es muß lediglich ein Durchgang für die zu bearbeitende Saite vorgesehen sein.

Mit einer solchen Anordnung kann eine bleibende Verformung der Oberfläche einer Monofilament-Saite erreicht werden. Wenn die zwischen den Walzen eingespannte Saite in ihrer Längsrichtung transportiert wird, drehen sich die Walzen und die Vorsprünge auf der Umfangsfläche der Walzen drücken sich in die Saite. So wird ein Profil entlang der Saite aufgebracht. Durch entsprechende Form und Anzahl der Walzen soll ein möglichst großer Bereich der Oberfläche der Saite mit den Umfangsflächen in Eingriff gebracht werden. Vorzugsweise sind die Walzen paarweise einander gegenüberliegend angeordnet.

Nach einer bevorzugten Gestaltung ist vorgesehen, daß vier formgebende Walzen verwendet werden, die jeweils um ca. 90° versetzt zueinander angeordnet sind, wobei ein Durchlaß für die zu bearbeitende Saite verbleibt, der geringfügig kleiner ist als der Durchmesser der zu bearbeitenden Saite. Die Walzen sind dabei so angeordnet, daß sie gleichzeitig auf denselben Abschnitt der Saite Druck ausüben und so durch plastische Verformung ein Profil auf der Oberfläche der Saite erzeugen, wobei die Form und Größe ihrer Umfangsflächen so aufeinander abgestimmt ist, daß ein möglichst großer Bereich der Saite mit den Walzen im Eingriff steht. So kann - im Gegensatz zur Verwendung von lediglich zwei Walzen - erreicht werden, daß erheblicher Druck aufgewendet wird und der Querschnitt der Saite trotzdem annähernd rund bleibt.

Für den Transport der Saite kann eine oder mehrere der Walzen angetrieben sein, so daß die Saite durch die Walzen transportiert wird. Nach einer Weiterbildung ist jedoch vorgesehen, daß die Walzen nicht angetrieben werden. Insbesondere weil der Walzvorgang bei Normaltemperatur durchgeführt wird, kann die Saite auch z. B. durch eine Aufwickelvorrichtung transportiert werden, weil sie dann hierfür die notwendige Festigkeit hat. Der Verzicht auf Antriebsmittel führt zu einer deutlichen Vereinfachung der Walzenkonstruktion. Die Erfahrung hat gezeigt, daß sich die Walzen allein durch den Transport der Saite ausreichend bewegen. Dies führt insbesondere dazu, daß die Saite schnell durch die Walzen gezogen werden kann, weil keine weitere Synchronisation mit der Aufwickelvorrichtung erforderlich ist. So können hohe Stückzahlen in geringer Zeit produziert werden.

Der Querschnitt der eingeprägten Vertiefungen kann beliebig gewählt werden, indem das Profil der Umfangsflächen entsprechend gestaltet wird. Er kann dreieckig, kegelstumpfförmig oder halbkreisförmig geformt sein. Abmessungen und Querschnitt werden in Abhängigkeit vom Material der Saite, vom zu bespannenden Schläger und vom zu spielenden Ball gewählt.

Gemäß einer besonders bevorzugten Ausführungsform der erfindungsgemäßen Vorrichtung sind die Umfangsflächen der Walzen mit schräg angeordneten Prägestegen versehen, so daß ein im wesentlichen schraubenförmiges Profil auf der Saite entsteht, das der Oberflächenstruktur einer gezwirnten Saite ähnelt.

Ausführungsbeispiele der Erfindung werden nachfolgend anhand der Zeichnungen im Detail erläutert. Es zeigen:
- Fig. 1: eine schematische perspektivische Darstellung einer Saite aus Kunststoff-Monofilament,
- Fig. 2: eine schematische Darstellung einer Saite aus Kunststoff-Monofilament im Querschnitt,
- Fig. 3: eine schematische Darstellung einer Saite aus Kunststoff-Monofilament in der Draufsicht,
- Fig. 4: eine schematische Darstellung einer Anlage zum Bearbeiten der Oberfläche einer Saite,
- Fig. 5: eine perspektivische Ansicht einer Prägevorrichtung zum Bearbeiten einer Saite,
- Fig. 6: eine schematische Darstellung von Prägewalzen an einer Saite.

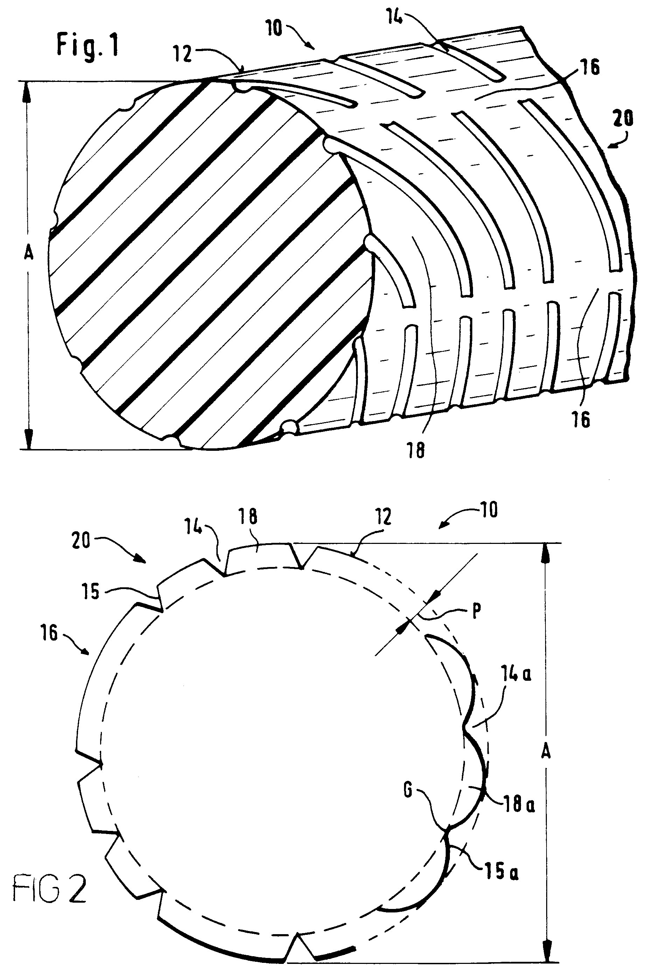

Fig. 1 zeigt eine schematisierte, vergrößerte Darstellung einer Saite 10 aus Kunststoff-Monofilament zum Bespannen von Ballspielschlägern.

Der Kunststoff ist Polyethylenterephtalat (PET), geeignet ist jedoch auch jeder andere Kunststoff, der den Anforderungen an die Reißfestigkeit, Elastizität, Witterungsbeständigkeit und Verarbeitbarkeit entspricht, die an Saiten für Ballspielschläger gestellt werden.

Die Saite 10 hat einen Außendurchmesser A von 1,4 mm. Der Durchmesser der Saiten kann jedoch auch dünner oder stärker gewählt werden, üblich sind Saitendurchmesser zwischen 1,0 mm und 1,8 mm.

Die Oberfläche 12 der Saite 10 ist mit einem Profil 20 versehen. Das Profil 20 besteht aus Vertiefungen 14. Die Vertiefungen sind als in die Oberfläche 12 der Saite 10 eingeprägte Rillen 14 ausgebildet. Zwischen den Rillen 14 sind Stege 18 gebildet. Die in Fig. 1 dargestellten Rillen 14 weisen eine Tiefe auf, die etwa 2 % des Außendurchmessers A der Saite entspricht. In anderen Ausführungsbeispielen ist die Tiefe der Rillen 14 erheblich größer. Es können Rillen von bis zu 20 % des Außendurchmessers A gebildet werden.

Die Rillen 14 laufen im wesentlichen schraubenförmig um die Oberfläche 12 der Saite 10 herum. Die Rillen sind jedoch durch Bereiche 16 unterbrochen. Die freien Bereiche 16 verlaufen auf der Oberfläche 12 der Saite 10 in Richtung ihrer Längsachse.

Die Saite 10 kann in bekannter Weise zur Bespannung von Ballspielschlägern verwendet werden. Aufgrund des Oberflächenprofils 20 ist sie besonders gut dazu geeignet, dem zu spielenden Ball eine erhöhte Eigendrehung zu verleihen. Ihre Lebensdauer, die vor allem durch die Abriebfestigkeit bestimmt ist, ist abhängig vom Außendurchmesser A. Da Abriebbeanspruchungen üblicherweise auf einem größeren Bereich der Oberfläche 12 auftreten, entspricht die Abriebfestigkeit der Saite 10 der einer nicht profilierten Saite von gleichem Durchmesser. Denn Beanspruchungen durch Abrieb greifen vor allem an die höherstehenden Bereiche, den Stegen 18 an.

Bezüglich der Elastizität unterscheidet sich die Saite 10 jedoch erheblich von einer vergleichbaren Saite ohne Oberflächenprofil. Durch die Rillen 14 wird der effektive Querschnitt der Saite 10 verringert und die Saite weist eine deutlich höhere Elastizität als eine vergleichbare, nicht profilierte Saite auf. Dieser Effekt ist bereits bei der hier dargestellten geringen Profiltiefe vorhanden, ist aber bei tieferen Rillen 14 stärker.

In Fig. 2 ist die Saite 10 im Querschnitt dargestellt. Die Rillen 14 sind V-förmig ausgebildet. Ihr tiefster Punkt liegt auf der Grundlinie G. Die Profiltiefe P, also der Abstand der Grundlinie G von der Oberfläche 12 der Saite 10 beträgt hier ca. 5,5 % des Außendurchmessers A. Die Profiltiefe P wird im allgemeinen zwischen ca. 2 % und 20 % des Außendurchmessers A gewählt, je nach den gewünschten Spiel- bzw. Elastizitätseigenschaften. Der zu spielende Ball erhält bereits bei geringer Profiltiefe eine erhöhte Eigendrehung.

Die Form der in die Oberfläche 12 eingeprägten Rillen 14 und die Form der dadurch gebildeten Stege 18 kann ebenfalls, je nach der Form des Werkzeugs, mit dem die Rillen 14 eingeprägt werden, unterschiedlich sein. In Fig. 2 ist beispielhaft auf der rechten Seite ein Bereich dargestellt, in dem Rillen 14a in die Oberfläche eingeprägt sind, die abgerundete Seitenflächen 15a aufweisen. Entsprechend weisen die Stege 18a abgerundete Querschnittsformen auf. In der Praxis sind eine Vielzahl von Rillen- bzw. Stegformen denkbar. Während scharfe Kanten die Mitnahme des Balles beim Schlag begünstigen, muß beachtet werden, daß aufgrund der plastischen Verformung beim Einprägen der Vertiefungen im allgemeinen mehr oder weniger runde Seitenflächen 15a entstehen werden.

Ebenso kann die Dichte der Rillen 14 auf der Oberfläche 12 und damit die Breite der Stege 18 stark variieren. Im vorliegenden Ausführungsbeispiel sind ca. 10 Rillen 14 auf einer Länge von 1 cm entlang der Längsachse der Saite 10 angeordnet.

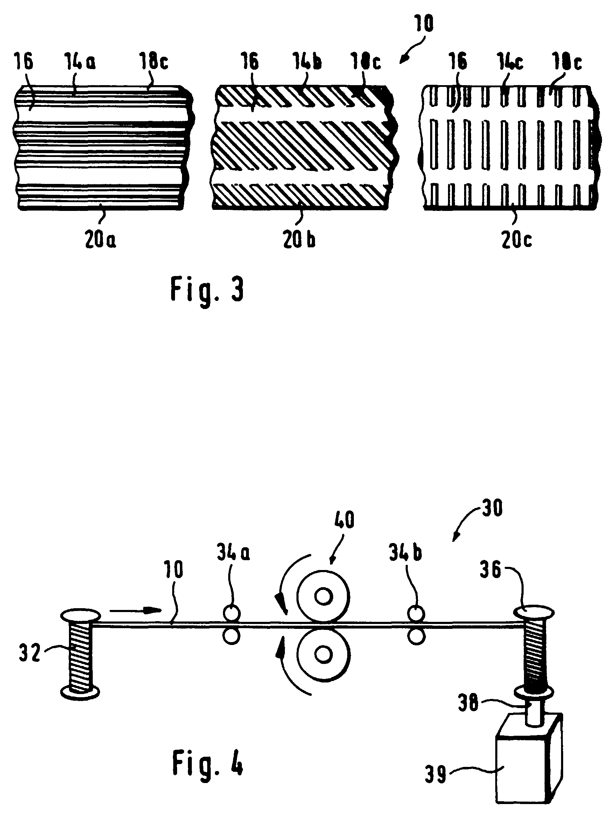

In Fig. 3 sind in schematisierter Darstellung jeweils Abschnitte einer Saite 10 mit verschiedenen Oberflächenprofilen 20a, 20b, 20c dargestellt. Das Oberflächenprofil 20a weist Rillen 14a auf, die in Richtung der Längsachse der Saite 10 verlaufen. Zwischen den Rillen 14a sind auch hier Stege 18a gebildet, die ebenfalls in Längsrichtung verlaufen. In Bereichen 16 ist kein Oberflächenprofil eingeprägt.

In der Mitte von Fig. 3 ist ein Abschnitt der Saite 10 abgebildet, der ein Oberflächenprofil 20b aus schräg zur Längsachse der Saite 10 angeordneten Rillen 14b aufweist. Der rechte Bereich der Saite 10 weist ein Oberflächenprofil 20c auf, das aus Rillen 14c besteht, die ringförmig um die Saite 10 herum verlaufen. Anhand dieser Beispiele sollte klar sein, daß eine Vielzahl von möglichen Profilen 20 durch unterschiedliche Anordnung der Rillen 14 auf der Oberfläche 12 der Saite 10 gebildet werden kann.

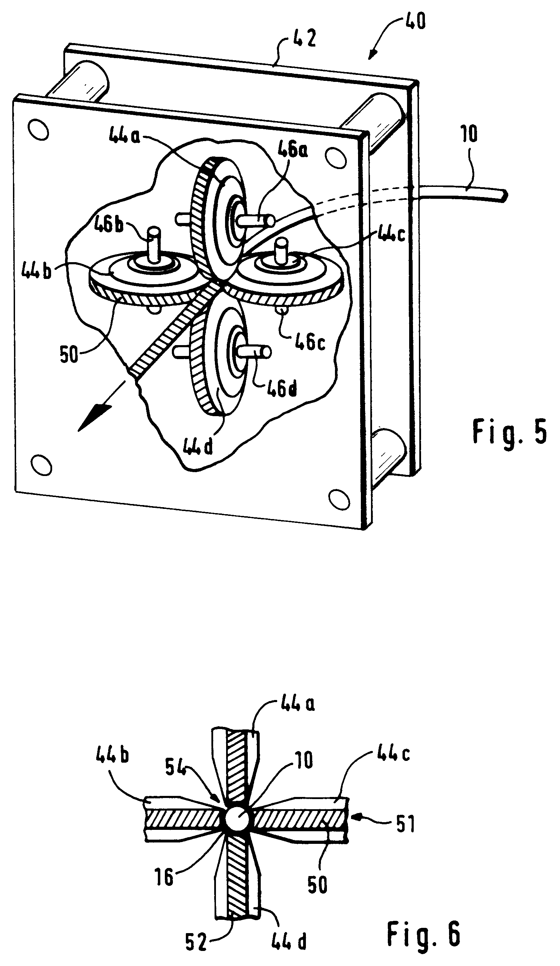

Im folgenden soll nun die in den Fig. 4, 5, 6 dargestellte Anlage zur Herstellung einer profilierten Saite 10 beschrieben werden.

In Fig. 4 ist eine Anlage 30 zur Bearbeitung einer Saite 10 schematisch dargestellt. Die Saite 10 befindet sich anfangs auf einer Vorratsspule 32. In der Vorrichtung 30 wird die Saite 10 zwischen (symbolisch dargestellten) Führungsmitteln 34a bis in eine Prägevorrichtung 40 geführt, in der das Oberflächenprofil 20 in die Oberfläche 12 der Saite 10 eingeprägt wird. Hinter der Prägevorrichtung 40 wird die bearbeitete Saite 10 durch Führungsmittel 34b zur Aufnahmespule 36 geführt. Die Aufnahmespule 36 ist auf der Welle 38 angeordnet, die durch die (symbolisch dargestellte) Antriebsvorrichtung 39 angetrieben wird.

Durch Drehen der Welle 38 wird die bearbeitete Saite 10 auf der Aufnahmespule 36 aufgewickelt. Die Saite 10 wird in dem gezeigten Ausführungsbeispiel ausschließlich durch das Aufwickeln auf der Aufnahmespule 36 transportiert, d.h. sie wird von der Spule 36 durch die Führungseinrichtungen 34a, 34b und durch die Prägevorrichtung 40 gezogen. Ebenso ist es möglich, z.B. die Führungseinrichtung 34b als angetriebene Rollen vorzusehen, die die Saite 10 durch die Prägeeinrichtung 40 ziehen.

Die auf der Vorratsspule 32 aufgewickelte Saite 10 ist eine handelsüblich erhältliche Saite aus Kunststoff-Monofilament. Durch die Prägevorrichtung 40 werden Vertiefungen 14 in die Saite 10 eingeprägt. Die auf der Aufnahmespule 36 aufgewickelte Saite 10 weist das in Fig. 1 dargestellte Oberflächenprofil 20 auf.

Die Prägevorrichtung 40 ist in Fig. 5 näher dargestellt. In einem Gehäuse 42 sind vier Walzen 44a, 44b, 44c, 44d angeordnet. Jede der Walzen 44a, 44b, 44c, 44d weist eine zugehörige Achse 46a, 46b, 46c 46d auf. Die Achsen 46a, 46b, 46c, 46d sind im Gehäuse in Lagern (nicht dargestellt) auf beiden Seiten der Walzen 44a, 44b, 44c, 44d drehbar gelagert. Die Position der nicht dargestellten Lager (z.B. Kugellager) ist, z.B. über eine Spindelvorrichtung (ebenfalls nicht dargestellt) einstellbar.

Die Achsen 46a, 46b, 46c, 46d der Walzen 44a, 44b, 44c, 44d befinden sich in einer Ebene. Die Walzen 44a, 44b, 44c, 44d weisen jeweils eine Umfangsfläche 50 mit einem Prägeprofil 51 auf, das die Negativ-Form des auf die Saite 10 aufzubringenden Profils aufweist. Die Walzen 44a, 44b, 44c, 44d weisen eine nach außen hin schmaler werdende Form auf. Die Umfangsflächen 50 sind geringfügig konkav gekrümmt. Die Walzen 44a, 44b, 44c, 44d sind jeweils paarweise oben und unten bzw. rechts und links von der zentral durchgeführten Saite 10 angeordnet. Durch Einstellen der Position der Achsen 46a, 46b, 46c, 46d wird der Abstand jeweils gegenüberliegender Paare (46a, 46d; 46b, 46c) so eingestellt, daß dieser Abstand geringfügig kleiner als der Außendurchmesser A der Saite 10 ist.

In einer schematischen Darstellung ist in Fig. 6 gezeigt, wie die vier Walzen 44a, 44b, 44c, 44d jeweils mit ihrer Umfangsfläche 50 an der in der Mitte durchgeführten Saite 10 anliegen. Die Walzen 44a, 44b, 44c, 44d werden von allen Seiten so gegen die Saite 10 gepreßt, daß sich das Prägeprofil 51 der Umfangsflächen 50 als Oberflächenprofil 20 in die Oberfläche 12 der Saite 10 einprägt. Das Prägeprofil 51 besteht aus vorspringenden, schräg angeordneten Prägestegen 52.

Wie schon erwähnt, wird der Abstand gegenüberliegender Umfangsflächen 50 so eingestellt, daß er geringfügig kleiner ist als der Außendurchmesser A der Saite 10. Wenn nun die Saite 10 zwischen den Umfangsflächen 50 zusammengedrückt wird, so verformt sie sich zunächst elastisch. An den Stellen, an denen die Prägestege 52 noch tiefer in das Kunststoffmaterial der Saite 10 eindringen, findet dann eine plastische Verformung statt: Die Rillen 14 werden als bleibende Verformung eingeprägt. Der exakte für eine zu erzielende Profiltiefe P einzustellende Abstand ist von den Materialeigenschaften der Saite 10 abhängig und kann durch einfache Versuche vom Fachmann leicht bestimmt werden.

Die Breite der Umfangsflächen 50 soll so gewählt werden, daß die Umfangsflächen 50 verschiedener Walzen 44a, 44b, 44c, 44d sich nicht berühren. Deshalb wird normalerweise ein Spalt 54 verbleiben. Diese Spalte 54 sind verantwortlich für die Bildung von freien Bereichen 16 (s. Fig. 1) im Oberflächenprofil 20.

Die Prägevorrichtung 40 kann besonders einfach ausgeführt werden, wenn kein Antrieb für die Walzen 44a, 44b, 44c, 44d vorgesehen ist. Durch die Reibung zwischen der Saite 10 und den Umfangsflächen 50 der Walzen 44a, 44b, 44c, 44d werden diese Walzen 44a, 44b, 44c, 44d bei Zug an der Saite 10 mitgedreht. Hierbei ist es im übrigen unerheblich, ob alle Walzen 44a, 44b, 44c, 44d stets synchron laufen. Denn die genaue Form des Profils 20 in der Oberfläche 12 ist für die Spieleigenschaften der Saite 10 nicht entscheidend. Ob also, wie in Fig. 1 dargestellt, die von den Umfangsflächen 50 verschiedener Walzen 44a, 44b, 44c, 44d eingeprägten Rillen 14 auf der Oberfläche 12 fluchtend verlaufen oder gegeneinander versetzt sind, spielt daher keine Rolle.

## Patentansprüche

1. Verfahren zum Herstellen einer Saite (10) für einen Ballspielschläger, bei dem
- die Oberfläche (12) einer Saite (10) aus Kunststoff so bearbeitet wird, daß ein Oberflächenprofil (20) gebildet wird,
dadurch gekennzeichnet, daß
- die Saite (10) bei Normaltemperatur unter Druck bleibend verformt wird, wobei
- das Oberflächenprofil (20) durch Einprägen von Vertiefungen (14) in die Oberfläche (12) der Saite (10) gebildet wird.

2. Verfahren nach Anspruch 1, dadurch gekennzeichnet, daß das Einprägen der Vertiefungen (14) durch Paare von formgebenden Walzen (44a, 44b, 44c, 44d) geschieht, die um im Abstand voneinander angeordnete Achsen (46a, 46b, 46c, 46d) rotieren und die mit jeweils einer Umfangsfläche (50), die die Negativ-Form des in die Oberfläche (12) der Saite (10) einzuprägenden Profils (20) aufweist, gegen die Saite (10) gepreßt werden, wobei der Abstand zwischen den Umfangsflächen (50) der formgebenden Walzen (44a, 44b, 44c, 44d) geringfügig kleiner ist als der Außendurchmesser (A) der zu bearbeitenden Saite (10).

3. Verfahren nach Anspruch 1 oder 2, dadurch gekennzeichnet, daß die Saite (10) durch ein Vorschubmittel (36, 38, 39) weitertransportiert wird, so daß sich die daran angedrückten Walzen (44a, 44b, 44c, 44d) mitdrehen.

4. Verfahren nach Anspruch 2 oder 3, dadurch gekennzeichnet, daß vier formgebende Walzen (44a, 44b, 44c, 44d) verwendet werden, die jeweils um ca. 90 ° versetzt zueinander angeordnet sind.

5. Verfahren nach einem oder mehreren der vorangehenden Ansprüche, dadurch gekennzeichnet, daß die Saite (10) vor der Bearbeitung einen im wesentlichen runden Querschnitt aufweist.

6. Verfahren nach einem oder mehreren der vorangehenden Ansprüche, dadurch gekennzeichnet, daß die Saite (10) aus Kunststoff-Monofilament besteht.

7. Verfahren nach einem oder mehreren der vorangehenden Ansprüche, dadurch gekennzeichnet, daß das Profil (20) im wesentlichen die Form einer oder mehrerer schraubenförmig um die Saite (10) verlaufender Rillen (14) aufweist.

8. Verfahren nach einem oder mehreren der vorangehenden Ansprüche, dadurch gekennzeichnet, daß die Vertiefungen (14) eine Tiefe von 2% bis 20% des Außendurchmessers (A) der Saite (10) aufweisen.

9. Verfahren nach einem oder mehreren der vorangehenden Ansprüche, dadurch gekennzeichnet, daß der Abstand zwischen den Umfangsflächen (50) zweier gegenüberliegender Walzen (44a, 44b, 44c, 44d) je nach gewünschter Profiltiefe (P) und Außendurchmesser (A) der Saite eingestellt wird.

10. Vorrichtung zum Bearbeiten der Oberfläche (12) einer Saite (10) für die Bespannung von Ballspielschlägern,
- mit formgebenden Walzen (44a, 44b, 44c, 44d), die um im Abstand voneinander angeordnete Achsen (46a, 46b, 46c, 46d) rotieren und die auf einer Umfangsfläche (50) die Negativ-Form eines auf die Oberfläche (12) der Saite (10) aufzubringenden Profils (20) aufweisen,
- wobei der Abstand zwischen den Umfangsflächen (50) der formgebenden Walzen (44a, 44b, 44c, 44d) geringfügig kleiner ist als der Außendurchmesser (A) der zu bearbeitenden Saite (10),
dadurch gekennzeichnet, daß
- keine Mittel zum Heizen der Saite (10) und/oder der Walzen (44a, 44b, 44c, 44d) vorgesehen sind.

11. Vorrichtung nach Anspruch 10, dadurch gekennzeichnet, daß eine Vorschubvorrichtung (36, 38, 39) zum Transport der Saite (10) vorgesehen ist und die Walzen (44a, 44b, 44c, 44d) nicht angetrieben sind.

12. Vorrichtung nach Anspruch 10 oder 11, dadurch gekennzeichnet, daß die Walzen (44a, 44b, 44c, 44d) paarweise einander gegenüberliegend angeordnet sind.

13. Vorrichtung nach einem der Ansprüche 10 bis 12, dadurch gekennzeichnet, daß vier formgebende Walzen (44a, 44b, 44c, 44d) jeweils um ca. 90 ° versetzt zueinander angeordnet sind.

14. Saite für die Bespannung von Ballspielschlägern, insbesondere von Tennisschlägern, aus einem Kunststoff-Monofilament, bei der in die Oberfläche (12) der Saite (10) Vertiefungen (14) durch Verformung unter Druck ohne Erwärmung der Saite (10) eingeprägt sind.

15. Saite nach Anspruch 14, dadurch gekennzeichnet, daß in die Oberflache (12) der Saite (10) ein Oberflächenprofil (20) eingeprägt ist, das im wesentlichen die Form von Rillen (14) aufweist, die schraubenförmig um die Saite (10) herum verlaufen.

16. Saite nach Anspruch 14 oder 15, dadurch gekennzeichnet, daß die Vertiefungen eine Tiefe von 2% bis 20% des Außendurchmessers (A) der Saite (10) aufweisen.
